# EUROPÄISCHE PATENTSCHRIFT

(11) **EP 1 019 883 B1**
(45) Veröffentlichungstag und Bekanntmachung des Hinweises auf die Patenterteilung: **27.02.2002**
(21) Anmeldenummer: 98956784.7
(22) Anmeldetag: 21.09.1998
(51) Int. Cl.: G08G 5/06

(54) **VERFAHREN UND VORRICHTUNG ZUR AUTOMATISCH UNTERSTÜTZTEN FÜHRUNG VON LUFTFAHRZEUGEN ZU EINER PARKPOSITION**
METHOD AND DEVICE FOR GUIDING AIRCRAFT INTO A PARKING POSITION WITH AUTOMATIC SUPPORT
PROCEDE ET DISPOSITIF DE GUIDAGE A ASSISTANCE AUTOMATIQUE D'AERONEFS VERS UN EMPLACEMENT DE STATIONNEMENT

(30) Priorität: 06.10.1997 DE 19744034
(43) Veröffentlichungstag der Anmeldung: 19.07.2000
(73) Patentinhaber: SIEMENS AKTIENGESELLSCHAFT, 80333 München (DE)
(72) Erfinder: CASTOR, Robert, D-85716 Unterschleissheim (DE)
(86) Internationale Anmeldenummer: DE9802798
(87) Internationale Veröffentlichungsnummer: WO9918555

(56) Entgegenhaltungen:
- EP-A- 0 459 295
- EP-A- 0 594 116
- WO-A-96/09207
- WO-A-96/20465
- WO-A-97/32291
- DE-A- 4 009 668
- DE-C- 19 602 607
- US-A- 5 657 077
- PATENT ABSTRACTS OF JAPAN vol. 017, no. 006 (E-1302), 7. Januar 1993 & JP 04 239279 A (FUJI PHOTO FILM CO LTD), 27. August 1992

## Beschreibung

Die vorliegende Erfindung betrifft ein Verfahren zur automatisch unterstützten Führung von Luftfahrzeugen zu einer Parkposition, wobei das Verfahren eine Sicherungsfunktion bereitstellt. Die Erfindung betrifft darüber hinaus eine Vorrichtung zur Durchführung des Verfahrens.

Beispielsweise aus der DE 40 09 668 A1 sind ein Verfahren und eine Vorrichtung zum positionsgenauen Abstellen von Flugzeugen bekannt. Dabei wird ständig die aktuelle Position eines Flugzeugs durch die Auswertung mindestens eines vom Flugzeug hervorgerufenen und von einem Detektor durch die Luft gemessenen wenigstens eindimensionalen Signalfeldes ermittelt. Nach Auswertung der Signale werden Anweisungen zur Positionskorrektur eines Luftfahrzeuges ausgegeben. Als Sensor wird eine Videokamera vorgeschlagen, deren Signale mit Referenzfeldern verglichen und so die Positionskorrektoren ermittelt werden. Zur Ausgabe dienen Signaltafeln, die vom Luftfahrzeugführer optisch erkennbar sind. Dieses vorbekannte Verfahren macht bereits die Verwendung von Druckmeldern, Induktionsschleifen und dergleichen überflüssig.

Auf moderneren Flughäfen sollen gelandete Flugzeuge möglichst schnell und weitgehend automatisiert zu einer genauen Halteposition geführt werden. Üblicherweise ist die Halteposition in bezug auf ein Flughafenterminal, einem sogenannten Gate, festgelegt.

Das vorbekannte Verfahren und die vorbekannte Vorrichtung unter Verwendung einer Videokamera und einer Anzeigesignaltafel lösen dieses Problem dem Grunde nach in einem an sich geschlossenen System, wobei das von der Videokamera zur Verfügung gestellte Signalfeld mit Referenz-Signalfeldern verglichen und die Korrekturen ermittelt und angezeigt werden. Das vorbekannte System weist Nachteile in bezug auf die Sicherheit auf, da eine Überprüfung und Überwachung aufwendig sind. Das Kontrollpersonal hat, wie derzeit üblich, auf Kontrollmonitoren die Belegungs- und Planungsdaten sowie Basisparameter zur Verfügung. Davon unabhängig wird das vorbekannte Positionierverfahren unter Verwendung der beschriebenen Vorrichtung durchgeführt. Eine Überprüfung ist allenfalls über zusätzliche technische Einheiten möglich und ein Eingriff kann allenfalls über herkömmliche Kommunikationswege erfolgen. Darüber hinaus ist ein zentrales Management einer Vielzahl von Belegungsvorgängen unter Einbindung des vorbekannten Positionierverfahrens nicht möglich, da keine Informationskopplung vorgesehen ist. Schließlich bieten die vorbekannten Verfahren und Vorrichtungen keine Möglichkeit, durchgeführte Parkiervorgänge nachträglich zu analysieren, beispielsweise zu statistischen Zwecken oder zur Ermittlung von Fehlerquellen, Unfallursachen und dergleichen.

Vor diesem Hintergrund liegt der vorliegenden Erfindung die Aufgabe zugrunde, ein Verfahren und eine Vorrichtung zur automatisch unterstützten Führung von Luftfahrzeugen zu einer Parkposition bereitzustellen, bei welchen eine erforderliche Erhöhung der Sicherheit und eine organisierte und weitestgehend zentralisierte Überwachung und Steuerung sowie nachträgliche Analysen der abgeschlossenen Parkiervorgänge ermöglicht sind.

Zur verfahrensseitigen Lösung dieser Aufgabe wird mit der Erfindung vorgeschlagen ein Verfahren zur automatisch unterstützten Führung von Luftfahrzeugen zu einer Parkposition, mit welchem der Steuerung eines Luftfahrzeuges automatisch Korrekturanweisungen für Richtung und Geschwindigkeit übermittelt werden, wobei mittels wenigstens einer Videokamera ein in einer durch einen Erfassungsbereich der wenigstens einen Videokamera liegenden Parkzone befindliches Luftfahrzeug mit der Videokamera erfasst wird und die von der Videokamera und gelieferten Signale in einer Auswerteeinheit zur Ermittlung der aktuellen Position des Luftfahrzeuges und der Korrekturanweisungen zum Erreichen einer vorgegebenen Position verarbeitet werden, wobei die von der Videokamera gelieferten Signale weiterhin zu Videosequenzen verarbeitet werden, wobei die Korrekturanweisungen zur Übermittlung an die Luftfahrzeugsteuerung sowie die Videosequenzen für die integrierte Darstellung zusammen mit weiteren Überwachungsdaten auf einem Kontrollmonitor bereitgestellt werden, wobei die Videosequenzen abrufbar auf einem Speichermedium gespeichert werden und wobei die Videosequenzen vor der Speicherung komprimiert werden.

Verfahrensseitig wird somit die Möglichkeit des Abrufens von Videosequenzen zur visuellen Überwachung eines Parkiervorganges von einem Kontrollarbeitsplatz in den Ablauf der Ermittlung und Übermittlung von Korrekturanweisungen integriert. Dieses erfindungsgemäße Verfahren ermöglicht somit dem Kontrollpersonal, üblicherweise einer Ground-Control- oder Ground-Service-Gruppe angehörig, welches mit der Organisation und dem Belegungsmanagement der Flugzeugterminals betraut ist, von einem zentralen Kontrollplatz aus, an dem die üblichen Belegungs-Planungs-Daten, Überwachungsparameter und dergleichen dargestellt werden, Videosequenzen auf dem gleichen Kontrollmonitor einzusehen, um sich von dem richtigen und ordnungsgemäßen Ablauf eines geplanten Parkiervorganges überzeugen zu können. Insbesondere ist wesentlich die Möglichkeit, die Videosequenzen auf einem Speichermedium abrufbar abzuspeichern. Die Speicherung erfolgt derart, dass die Videosequenzen einem konkret durchgeführten Parkiervorgang zugeordnet werden können, das heißt, die Videosequenzen werden bei der Speicherung so archiviert, dass sie beispielsweise hinsichtlich Datum, Luftfahrzeugnummer, Parkiervorgang und dergleichen abrufbar und wieder auf einem Monitor darstellbar sind. Dabei werden die zu speichernden Videosequenzen komprimiert.

Durch dieses erfindungsgemäße Verfahren wird einerseits die Sicherheit erheblich erhöht, wodurch dem zeitgemäßen Erfordernis an Abwicklungssicherheit aufgrund erheblich erhöhten Flugaufkommens genüge getan wird, andererseits wird ein vollständiges zentrales Management realisierbar. Durch die archivierte Speicherung der Videosequenzen lassen sich diese nach Abschluss von Parkiervorgängen jederzeit wieder auf einem Monitor darstellen, also analysieren. Somit können automatische Analysen der Videosequenzen durchgeführt werden, beispielsweise von Programmen, die aus dem Vergleich einer Vielzahl von Videoanalysen Steuerparameter ermitteln, es ist aber auch die einfache Möglichkeit gegeben, die Videosequenzen von abgeschlossenen Parkiervorgängen zu visualisieren, beispielsweise um Unfallursachen ermitteln zu können, wobei durch die erfindungsgemäße Verfahrensweise die zu speichernde Datenmenge stark reduziert wird.

Aus der zeitgleich angemeldeten, eine ältere Priorität aufweisenden WO99/17263 sind ein Verfahren und eine Vorrichtung bekannt, die eine sichere Abwicklung der Docking-Vorgänge ermöglichen. Hier müssen jedoch große Datenmengen gespeichert und ggf. ausgewertet werden.

Erfindungsgemäß lassen sich die Videosequenzen in besonders vorteilhafter Weise auf mobilen Speichermedien speichern, um die gespeicherten Einheiten an sicheren Orten aufbewahren oder an unterschiedlichen Arbeitsplätzen visualisieren zu können. Durch die Erfindung lassen sich die vorzugsweise digital vorliegenden Videosequenzen speichern, weiterverarbeiten, lagern und abrufen, und zwar völlig unabhängig von dem eigentlichen zur Videoüberwachung und Steuerung von Luftfahrzeugen verwendeten System. Das Video-Überwachungsverfahren umfasst somit den Abwicklungsbereich, um mit der wenigstens einen Videokamera ab einer bestimmten Position, in welcher das Luftfahrzeug die von der Videokamera erfassbare Parkzone erreicht, die aktuelle Position des Luftfahrzeugs zu erfassen, hinsichtlich Position und Ausrichtung zu verarbeiten und mit Sollwerten zu vergleichen, um daraus Anweisungen in bezug auf Richtungsänderung und Geschwindigkeitsänderung zu errechnen und zur Anzeige bereitzustellen. Dabei wird mit der Erfindung vorgeschlagen, dass neben Positionsdaten auch der Fahrzeugtyp automatisch ermittelt wird. Der Luftfahrzeugtyp beeinflusst die Errechnung der Korrekturwerte, da unterschiedliche Luftfahrzeugtypen hinsichtlich Geschwindigkeits- und Richtungsänderungen sich unterschiedlich verhalten. Entsprechend können die Korrekturwerte aufgrund unterschiedlicher Typreferenzen beeinflusst werden. Mit der Erfindung wird weiterhin vorgeschlagen, dass durch die Videoerfassung eine Gesamtobjekterfassung im Parkzonenbereich erfolgt. Sämtliche statischen oder dynamischen Objekte im Parkzonenbereich werden erfasst und identifiziert. Das System ist somit in der Lage, Servicefahrzeuge, Einrichtungen und dergleichen anhand von vorgegebenen und gespeicherten Referenzsignalen zu identifizieren und bei der Führung des Luftfahrzeuges zu berücksichtigen.

Mit der Erfindung wird weiterhin vorgeschlagen, dass die Signale von zwei hinsichtlich des optischen Erfassungsbereiches parallel angeordneten Videokameras ausgewertet werden. Einerseits wird durch die Redundanz der Sensorik die Sicherheit erheblich erhöht, andererseits ergeben sich Möglichkeiten wie eine Selbst-Funktions-Überprüfung des Systems, Auswahl des jeweils geeignet positionierten Sensors in Abhängigkeit von der Größe des Luftfahrzeugs und dergleichen. Vorzugsweise werden die wenigstens zwei Videokameras im vorgegebenen Abstand übereinander angeordnet. Die Kameras befinden sich vorzugsweise an der Außenseite des Flugterminals in einer gedachten Geraden durch den Haltepunkt und den Fahrweg des Luftfahrzeugs kurz vor der Halteposition.

In vorteilhafter Weise werden die Videosequenzen als digitale Sequenzen bereitgestellt. Dadurch wird ermöglicht, dass die Videosequenzen hinsichtlich Position, Größe und Zoomfaktor auf dem Kontrollmonitor positioniert werden. Dieser modulare Ansatz ermöglicht es dem Kontrollpersonal, je nach aktueller Wichtigkeit die Überwachungsdaten, die Videosequenzen, Planungsdaten und dergleichen hinsichtlich Position und Größe auf dem Kontrollmonitor anzuordnen.

Mit Vorteil wird weiterhin vorgeschlagen, dass die Videosequenzen verschiedener Terminals für einen beliebigen Abruf bereitgestellt werden. Die Kontrollperson kann somit zwischen unterschiedlichen Terminals umschalten oder sich gleichzeitig mehrere Videosequenzen auf dem Monitor positionieren.

Diese erfindungsgemäße Speicherungsmöglichkeit stellt einen erheblichen Sicherheitsfaktor dar, da die gespeicherten Videosequenzen für eine Sensibilisierung des Erfassungssystems, zur Verbesserung der Korrekturerrechnungen und zur späteren Überprüfung von möglicherweise fehlerhaft durchgeführten Parkiervorgängen herangezogen werden können.

In vorteilhafter Weise werden die Daten von Videokameras unterschiedlicher Parkzonen in einer Auswerteeinheit verarbeitet. Diese Mehrzonenfähigkeit verbessert die Koordinierung und Kontrollierbarkeit und erhöht die Wirtschaftlichkeit des Systems.

Verfahrensgemäß werden die Korrekturwerte an die Luftfahrzeugführer optisch übermittelt. Hierzu eignen sich insbesondere Signaltafeln, die in mit einem Blick erfassbarer Weise Signale für die Richtung, links/rechts, die Geschwindigkeit in der Vorausfahrt und einen Stopp darstellen können.

Mit besonderem Vorteil wird weiterhin vorgeschlagen, dass Umweltparameter wie Helligkeit, Temperatur, Sichtverhältnisse und dergleichen erfasst und entweder bei der Ermittlung der Korrekturwerte und/oder bei der Verbesserung der Videosequenzen im Sinne einer Filterung zur Erhöhung der Sichtbarkeit berücksichtigt werden.

Mit der Erfindung wird ein Verfahren bereitgestellt, welches die exakte Positionierung eines Luftfahrzeugs innerhalb der letzten Phase eines Parkvorganges weitestgehend automatisch geführt ermöglicht und darüber hinaus die Möglichkeiten der zentralen Überwachung, Kontrolle und des zentralen Managements beinhaltet. Dabei ist das Verfahren mit einfachen Mitteln auf wirtschaftliche Weise durchführbar. Für die Signalübermittlung stehen die üblichen Leitungs-Übermittlungsverfahren einschließlich Glasfaseroptik als auch die üblichen funktechnischen Verfahren einschließlich der Nutzung der Mobilfunksysteme zur Verfügung. Die Sicherheit ist durch die Speichermöglichkeit gegeben.

Vorrichtungsseitig wird zur technischen Lösung der Erfindung vorgeschlagen eine Vorrichtung zur automatisch unterstützten Führung von Luftfahrzeugen zu einer Parkposition gemäß dem Verfahren nach wenigstens einem der vorhergehenden Ansprüche, mit wenigstens einer in einem Parkzonenbereich angeordneten Videokamera, einer mit dieser verbundenen Auswerteeinheit, die der Auswertung der Videosignale zur Ermittlung von Korrekturwerten zur Führung des Luftfahrzeuges dient, und einer Signalübermittlungseinheit zur Übermittlung der Korrekturwerte an das Luftfahrzeug, wobei die mit der Videokamera verbundene Auswerteeinheit weiterhin zur Bereitstellung von Videosequenzen dient, die Vorrichtung weiterhin eine Videosequenzübermittlungseinheit zur Bereitstellung der Videosequenzen zum Abruf durch Kontrollpersonal aufweist und die Vorrichtung wenigstens eine Speichereinheit zur Speicherung der Videosequenzen aufweist, wobei die Speichereinheit eine Disk-Einheit ist.

Die erfindungsgemäße Vorrichtung umfasst auf Seiten des Flugterminals die wenigstens eine Videokamera als Sensor und die wenigstens eine Übermittlungseinheit für die Korrekturwerte. Als Übermittlungseinheit kommt gemäß einem Vorschlag der Erfindung eine optische Signaltafel in Frage. Alternativ können auch andere Signalübermittlungsmöglichkeiten genutzt werden. Als Speichermedien kommen dabei die Compactdisk, Floppydisk, JAZ, und dergleichen in Frage. Auch an sich bekannte Bandsysteme und dergleichen können eingesetzt werden.

Mit Vorteil wird vorgeschlagen, dass zwei Videokameras im Parkzonenbereich mit im wesentlichen gleichen Erfassungsbereichen angeordnet werden. Beide Kameras können beispielsweise senkrecht mit vorgegebenem Abstand übereinander positioniert und parallel ausgerichtet werden. So kann je nach Größe des Luftfahrzeuges die obere Kamera für größere, die untere für kleinere Luftfahrzeuge verwendet werden. Auch können die Kameras gleichzeitig zu Zwecken der Systemüberprüfung und/ oder redundant zu Zwecken der Erhöhung der Systemsicherheit eingesetzt werden.

Die Auswerteeinheit ist in vorteilhafter Weise ein Rechner, der beispielsweise einen Multiplexer für die Videokameras, einen sogenannten Frame-Grabber zur Kantenerfassung, einen Prozessor zur Datenauswertung und Sollwert-Ermittlung, einen Speicher und die erforderlichen Ausgabeschnittstellen umfasst.

Es können mehrere Auswerteeinheiten mit einer Zentraleinheit gekoppelt sein, um eine zentrale Nutzung gemeinsamer Einheiten zu ermöglichen, beispielsweise gemeinsame Speicher, Prozessoren für Spezialberechnungen und dergleichen.

Die Vorrichtung umfasst vorteilhaft eine Kontrolleinheit, die beispielsweise ein Rechner ist und wenigstens einen Kontrollmonitor umfasst, der zur integrierten Darstellung von Überwachungs- und Planungsdaten sowie Videosequenzen eingesetzt ist.

Es ist möglich, dass die Kontrolleinheit mit einem Flughafenmanagementsystem gekoppelt ist, so dass Belegungs-, Planungs-, Budgetierungsdaten und dergleichen ausgetauscht werden können. So kann beispielsweise vom Managementsystem bereits eine luftfahrzeugtypische Information wie Fluggesellschaft, Flugnummer, Luftfahrzeugtyp und dergleichen bereitgestellt werden und über die Kontrolleinheit oder direkt auch der Auswerteeinheit zur Verfügung gestellt werden. Diese kann dann diese Daten bereits bei der Ermittlung der Korrekturwerte berücksichtigen, ohne eine Luftfahrzeugidentifikation durchführen zu müssen. Zumindest wird die Geschwindigkeit bei der Luftfahrzeugidentifikation erheblich erhöht, wobei auch eine Sicherheitserhöhung gewährleistet ist.

Die Vorrichtung umfasst eine Speichereinheit zur archivierten Speicherung von Videosequenzen. Diese stehen dann zur Verfügung, um nachträglich zu unterschiedlichen Zwecken ausgewertet zu werden.

Im Bereich der Signalübermittlungseinheit ist ein Bedienpanel für eine vor Ort befindliche Bedienperson angeordnet. Eine im Bereich des Luftfahrzeugterminals befindliche Bedienperson ist somit in der Lage, direkt Signale über die Signalübermittlungseinheit an die Luftfahrzeugführung abzugeben, beispielsweise wenn ein Ausfall des Systems oder andere Sicherheitserwägungen dies erforderlich machen.

Mit der Erfindung wird eine modular und übersichtlich organisierte Vorrichtung für die automatisch unterstützte Führung von Luftfahrzeugen in die Parkposition bereitgestellt, welche bei einem hohen Grad von Bediensicherheit eine Integration der Videoüberwachung in die Datenübersicht für das Kontrollpersonal ermöglicht.

Weitere Vorteile und Merkmale der Erfindung ergeben sich aus der folgenden Beschreibung anhand der Figuren. Dabei zeigen:
- FIG 1: eine schematische Darstellung der Betriebssituation im Flugvorfeld,
- FIG 2: eine Darstellung eines Ausführungsbeispiels eines Parkiervorganges,
- FIG 3: eine Darstellung der Anordnung der Videokameras,
- FIG 4: eine schematische Darstellung des Organisationsschemas einer Gate-Planung unter Verwendung der Erfindung und
- FIG 5: eine schematische Darstellung einer Videosequenz.

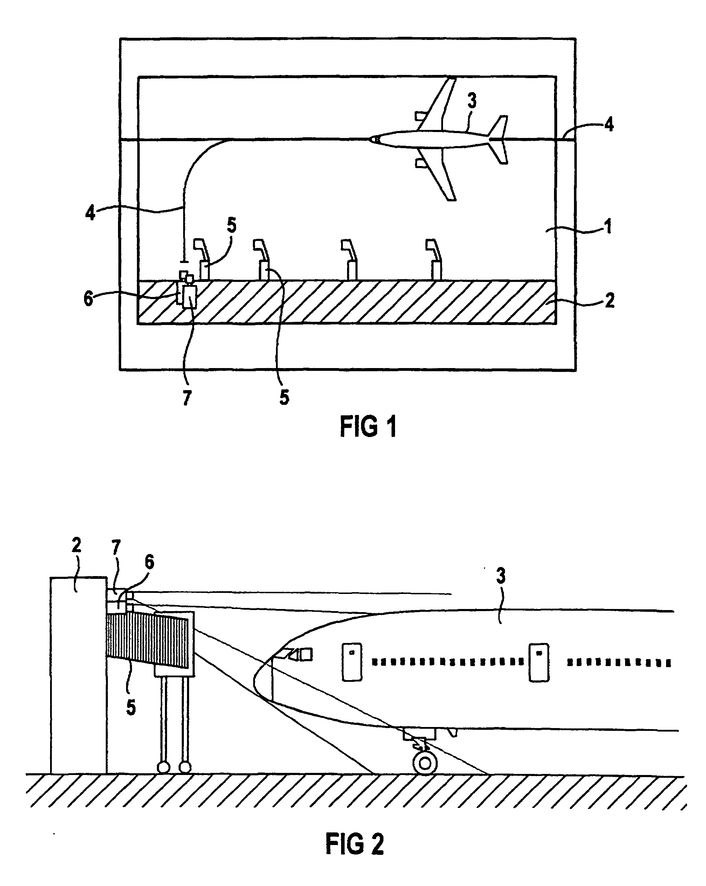

In FIG 1 ist grob übersichtlich eine Flugvorfeldsituation gezeigt. Im Flugvorfeldbereich 1 vor einem Terminalgebäude 2 befindet sich auf einem sogenannten Taxiway, üblicherweise markiert mit auf dem Boden gezeichneten Linien, ein Flugzeug 3. Der Taxiway 4 ist ergänzt um die zu den einzelnen Gates 5 führenden Linien.

Im Bereich eines jeden Gates sind zwei Videokameras 6, 7 im wesentlichen übereinander und zueinander parallel angeordnet. Im vorliegenden Fall wird davon ausgegangen, dass von der Gate-Planung dem anrollenden Flugzeug 3 das in FIG 1 ganz links gezeigte Gate zugewiesen ist. Etwa wenn das Flugzeug 3 nach Abbiegen vom geraden Taxiway die gerade auf das Gate 5 führende Linie erreicht hat, beginnt die automatische Erfassung, Auswertung und Führung des Flugzeugs.

Diese Situation ist grob in einer Seitenansicht in FIG 2 gezeigt, wobei von den beiden Kameras im gezeigten Ausführungsbeispiel die untere, Kamera Nr. 6, im Einsatz ist. Die beiden Kameras können vollständig redundant, gleichzeitig oder in Abhängigkeit beispielsweise von der Größe des Flugzeugs eingesetzt werden.

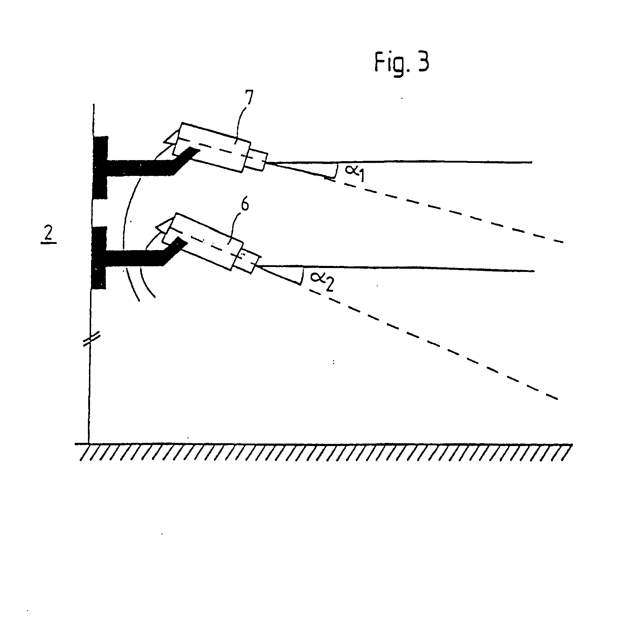

FIG 3 zeigt schematisch die Anordnung der Kameras 6 und 7. Diese sind im wesentlichen übereinander angeordnet, im wesentlichen zueinander parallel, wobei jedoch die Erfassungswinkel α1 und α2 unterschiedlich sind. Im gezeigten Ausführungsbeispiel ist der Erfassungswinkel α1 der oberen Kamera 7 kleiner als der Erfassungswinkel α2 der unteren Kamera. Als Anordnungshöhe für die untere Kamera haben sich etwa 12 m als zweckmäßig erwiesen.

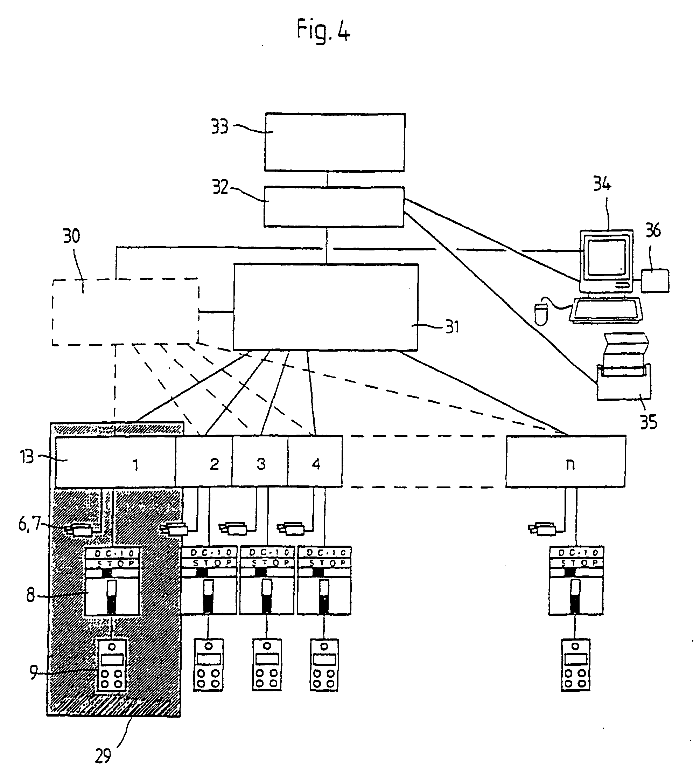

FIG 4 zeigt schematisch die Schaltungsorganisation einer entsprechenden Anlage auf einem Flughafen. Mit 29 ist die Anlage einer Station beziehungsweise eines Gates gezeigt. Diese Anlage enthält die beiden Kameras 6 und 7, die Anzeigetafel 8, das Bedienpanel 9 und eine Auswerteeinheit 13. Eine Vielzahl solcher Anlagen 1 bis N sind an den verschiedenen Gates 1 bis N angeordnet. Alle zusammen sind, vorzugsweise über serielle Verbinder, mit einem Kommunikationsnetz 31 für den Datenaustausch und mit einem Videonetz 30 für den Austausch von Videosequenzen ausgestattet. Das Videonetz kann auch über optische Verbinder organisiert sein, so dass eine Digitalisierung zur Anzeige von Videosequenzen erst später erfolgt, beispielsweise im Arbeitsplatzrechner des Controllers. Der Controller sitzt an einer sogenannten Gate-Planungsstelle 32. Äußere Ein- und Ausgänge 33 sind neben einem Rechner-Arbeitsplatz 34 und einem Drucker 35 angeschlossen. Der Controller kann auf dem Rechnerarbeitsplatz 34 sowohl Daten als auch Videosequenzen zur Anzeige bringen. Vorzugsweise wird hierzu eine sogenannte Window-Technik verwendet, so dass Position, Größe und dergleichen der einzelnen Anzeigen bestimmt werden können. Am Rechnerarbeitsplatz ist die Speichereinheit 36 angeordnet. Diese kann auch in diesen integriert sein, beispielsweise im Rechnergehäuse.

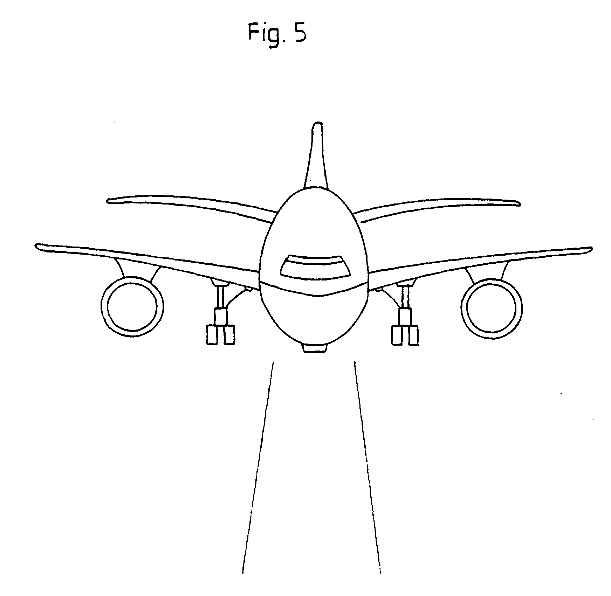

Schließlich zeigt FIG 5 beispielhaft eine Videosequenz, die sich der Controller auf dem Bildschirm positionieren und anordnen kann. Er kann vorzugsweise auch zoomen und Details erblicken. Auch kann er sich die Videosequenzen des jeweiligen Gates auf den Monitor holen, welches er zu überwachen gedenkt. Schließlich kann er über die Eingabeeinheiten des Rechnerarbeitsplatzes notfalls auch in das Geschehen eingreifen, beispielsweise indem er Anweisungen auf der Signaltafel erzeugt. Die Videosequenzen können komprimiert oder unkomprimiert auf dem Speicher gespeichert werden. Beispielsweise können die CD-ROMs, Floppydisks oder sonstige Speichermedien dann archiviert und gelagert werden, um für spätere Auswertungen zur Verfügung zu stehen.

Die gezeigten Ausführungsbeispiele dienen nur der Erläuterung und sind nicht beschränkend.

## Patentansprüche

1. Verfahren zur automatisch unterstützten Führung von Luftfahrzeugen zu einer Parkposition, mit welchem der Steuerung eines Luftfahrzeuges (3) automatisch Korrekturanweisungen für Richtung und Geschwindigkeit übermittelt werden, wobei mittels wenigstens einer Videokamera (6,7) ein in einer durch einen Erfassungsbereich (α1,α2) der wenigstens einen Videokamera (6,7) liegenden Parkzone befindliches Luftfahrzeug (3) mit der Videokamera (6,7) erfasst wird und die von der Videokamera (6,7) gelieferten Signale in einer Auswerteeinheit (13) zur Ermittlung der aktuellen Position des Luftfahrzeuges (3) und der Korrekturanweisungen zum Erreichen einer vorgegebenen Position verarbeitet werden, wobei die von der Videokamera (6,7) gelieferten Signale weiterhin zu Videosequenzen verarbeitet werden, wobei die Korrekturanweisungen zur Übermittlung an die Luftfahrzeugsteuerung sowie die Videosequenzen für die integrierte Darstellung zusammen mit weiteren Überwachungsdaten auf einem Kontrollmonitor bereitgestellt werden, wobei die Videosequenzen abrufbar auf einem Speichermedium (36) gespeichert werden, und wobei die Videosequenzen vor der Speicherung komprimiert werden.

2. Verfahren nach Anspruch 1, **dadurch gekennzeichnet, dass** die Videosequenzen auf mobilen Speichereinheiten gespeichert werden.

3. Verfahren nach einem der vorhergehenden Ansprüche, **dadurch gekennzeichnet, dass** zwei Videokameras (6,7) mit im wesentlichen gleichem Erfassungsbereich (α1,α2) eingesetzt werden.

4. Verfahren nach einem der vorhergehenden Ansprüche, **dadurch gekennzeichnet, dass** die Videosequenzen als digitale Sequenzen bereitgestellt werden.

5. Verfahren nach Anspruch 4, **dadurch gekennzeichnet, dass** die Darstellung der Videosequenzen auf dem Kontrollmonitor positionierbar ist.

6. Verfahren nach einem der Ansprüche 4 oder 5, **dadurch gekennzeichnet, dass** die Darstellung der Videosequenzen auf dem Kontrollmonitor hinsichtlich der Größe einstellbar ist.

7. Verfahren nach einem der Ansprüche 4 bis 6, **dadurch gekennzeichnet, dass** die Videosequenzen zoombar sind.

8. Vorrichtung zur automatisch unterstützten Führung von Luftfahrzeugen zu einer Parkposition gemäß dem Verfahren nach wenigstens einem der vorhergehenden Ansprüche, mit wenigstens einer in einem Parkzonenbereich angeordneten Videokamera (6, 7), einer mit dieser verbundenen Auswerteeinheit (13), die der Auswertung der Videosignale zur Ermittlung von Korrekturwerten zur Führung des Luftfahrzeuges (3) dient, und einer Signalübermittlungseinheit (8) zur Übermittlung der Korrekturwerte an das Luftfahrzeug (3), wobei die mit der Videokamera (6,7) verbundene Auswerteeinheit (13) weiterhin zur Bereitstellung von Videosequenzen dient, die Vorrichtung weiterhin eine Videosequenzübermittlungseinheit zur Bereitstellung der Videosequenzen zum Abruf durch Kontrollpersonal aufweist und die Vorrichtung wenigstens eine Speichereinheit (36) zur Speicherung der Videosequenzen aufweist, wobei die Speichereinheit (36) eine Disk-Einheit ist.

9. Vorrichtung nach Anspruch 8, **dadurch gekennzeichnet, dass** eine Kontrolleinheit (9,34) zur Datenein- und -ausgabe vorgesehen ist.

10. Vorrichtung nach Anspruch 9, **dadurch gekennzeichnet, dass** die wenigstens eine Speichereinheit (36) mit der Kontrolleinheit (34) gekoppelt ist.

## Claims

1. Process for automatically supported guidance of aircraft to a parking position, with which correction instructions for direction and speed are automatically transmitted to the controls of an aircraft (3), wherein by means of at least one video camera (6, 7), an aircraft (3) located in a parking zone lying through a recording area (α1, α2) of the at least one video camera (6, 7) is recorded by the video camera (6, 7) and the signals delivered by the video camera (6, 7) are processed in an evaluation unit (13) to determine the current position of the aircraft (3) and the correction instructions for reaching a predetermined position, the signals delivered by the video camera (6, 7) furthermore being processed to form video sequences, the correction instructions for transmission to the aircraft controls as well as the video sequences for the integrated display being made available, together with further monitoring data, on a control monitor, the video sequences being stored retrievably on a storage medium (36), and the video sequences being compressed prior to storage.

2. Process according to Claim 1, **characterised in that** the video sequences are stored on mobile storage units.

3. Process according to one of the preceding claims, **characterised in that** two video cameras (6, 7) having substantially the same acquisition area (α1, α2) are used.

4. Process according to one of the preceding claims, **characterised in that** the video sequences are made available as digital sequences.

5. Process according to Claim 4, **characterised in that** the display of the video sequences on the control monitor is positionable.

6. Process according to one of Claims 4 and 5, **characterised in that** the size of the display of the video sequences on the control monitor is adjustable.

7. Process according to one of Claims 4 to 6, **characterised in that** the video sequences are zoomable.

8. Device for automatically supported guidance of aircraft to a parking position using the process according to at least one of the preceding claims, having at least one video camera (6, 7) arranged in a parking-zone area, an evaluation unit (13) which is connected to the said at least one video camera and is used for evaluating the video signals to determine correction values for guiding the aircraft (3), and a signal-transmission unit (8) for transmitting the correction values to the aircraft (3), the evaluation unit (13) connected to the video camera (6, 7) furthermore being used to provide video sequences, the device furthermore having a video-sequence transmission unit to make the video sequences available for retrieval by control personnel and the device having at least one storage unit (36) for storing the video sequences, the storage unit (36) being a disk unit.

9. Device according to Claim 8, **characterised in that** a control unit (9, 34) is provided for data input and output.

10. Device according to Claim 9, **characterised in that** the at least one storage unit (36) is coupled to the control unit (34).

## Revendications

1. Procédé pour le guidage automatiquement assisté d'aéronefs vers une position de stationnement, avec lequel on transmet automatiquement à la commande d'un aéronef (3) des instructions de correction pour la direction et pour la vitesse, dans lequel, au moyen d'au moins une caméra vidéo (6, 7), on détecte avec la caméra vidéo (6, 7) un aéronef (3) se trouvant dans une zone de stationnement située dans une zone de détection (α1, α2) de la ou des caméras vidéo (6, 7), dans lequel on traite les signaux fournis par la caméra vidéo (6, 7) dans une unité d'évaluation (13) pour la détermination de la position actuelle de l'aéronef (3) et des instructions de correction pour atteindre une position prescrite, dans lequel on traite ensuite les signaux fournis par la caméra vidéo (6, 7) en séquences vidéo, dans lequel on prépare les instructions de correction pour la transmission à la commande d'aéronef ainsi que les séquences vidéo pour la représentation intégrée conjointement à d'autres données de surveillance sur un moniteur de contrôle, dans lequel on mémorise dans une mémoire (36) les séquences vidéo de manière à pouvoir les interroger et dans lequel on comprime les séquences vidéo avant la mémorisation.

2. Procédé selon la revendication 1, **caractérisé par le fait qu'**on mémorise les séquences vidéo sur des unités de mémorisation mobiles.

3. Procédé selon l'une des revendications précédentes, **caractérisé par le fait qu'**on utilise deux caméras vidéo (6, 7) ayant des zones de détection (α1, α2) sensiblement identiques.

4. Procédé selon l'une des revendications précédentes, **caractérisé par le fait qu'**on prépare les séquences vidéo sous forme de séquences numériques.

5. Procédé selon la revendication 4, **caractérisé par le fait que** la représentation des séquences vidéo est positionnable sur le moniteur de contrôle.

6. Procédé selon l'une des revendications 4 ou 5, **caractérisé par le fait que** la représentation des séquences vidéo sur le moniteur de contrôle est réglable quant à sa dimension.

7. Procédé selon l'une des revendications 4 à 6, **caractérisé par le fait que** les séquences vidéo peuvent être grossies.

8. Dispositif qui est destiné au guidage automatiquement assisté d'aéronefs vers une position de stationnement avec le procédé selon au moins l'une des revendications précédentes et qui comporte au moins une caméra vidéo (6, 7) disposée dans la zone de stationnement, une unité d'évaluation (13) reliée à cette ou ces caméras vidéo et servant à l'évaluation des signaux vidéo pour déterminer des valeurs de correction destinées au guidage de l'aéronef (3) et une unité de transmission de signal (8) pour la transmission des valeurs de correction à l'aéronef (3), l'unité d'évaluation (13) reliée à la caméra vidéo (6, 7) servant aussi à préparer des séquences vidéo et le dispositif comportant aussi une unité de transmission de séquences vidéo pour mettre à disposition des séquences vidéo en vue d'une interrogation par le personnel de contrôle et au moins une unité de mémorisation (36) pour mémoriser les séquences vidéo, l'unité de mémorisation (36) étant une unité à disque.

9. Dispositif selon la revendication 8, **caractérisé par le fait qu'**une unité de contrôle (9, 34) est prévue pour l'entrée et la sortie de données.

10. Dispositif selon la revendication 9, **caractérisé par le fait que** la ou les unités de mémorisation (36) sont connectées à l'unité de contrôle (34).
